# EUROPÄISCHE PATENTSCHRIFT

(11) **EP 1 735 357 B1**
(45) Veröffentlichungstag und Bekanntmachung des Hinweises auf die Patenterteilung: **05.01.2011**
(21) Anmeldenummer: 05731958.4
(22) Anmeldetag: 24.03.2005
(51) Int. Cl.: C08F 259/08

(54) **RADIKALISCH GEKOPPELTE PERFLUORPOLYMER-POLYMER-MATERIALIEN UND VERFAHREN ZU IHRER HERSTELLUNG**
RADICALLY COUPLED PERFLUOROPOLYMER-POLYMER MATERIALS AND METHOD FOR PRODUCING THE SAME
MATERIAUX PERFLUOROPOLYMERE-POLYMERE A COUPLAGE RADICALAIRE ET LEUR PROCEDE DE PRODUCTION

(30) Priorität: 29.03.2004 DE 102004016876
(43) Veröffentlichungstag der Anmeldung: 27.12.2006
(73) Patentinhaber: Leibniz-Institut für Polymerforschung Dresden e.V., 01069 Dresden (DE)
(72) Erfinder: LEHMANN, Dieter, 01640 Coswig (DE)
(74) Vertreter: Rauschenbach, Marion
(86) Internationale Anmeldenummer: PCT/EP2005/051377
(87) Internationale Veröffentlichungsnummer: WO 2005/092939

(56) Entgegenhaltungen:
- WO-A-2005/042596
- WO-A-2005/042597
- US-A- 3 870 691
- US-A- 4 385 130

## Beschreibung

Die Erfindung bezieht sich auf das Gebiet der Chemie und betrifft radikalisch gekoppelte Perfluorpolymer-Polymer-Materialien, die beispielsweise als Tribowerkstoffe oder zur Herstellung von Brennstoffzellenmembran-Vorprodukten oder Brennstoffzellenmembranmaterialien zur Anwendung kommen können und ein Verfahren zu ihrer Herstellung.

"...Ungesinterte und unverpreßte PTFE-Emulsions- und -Suspensionspolymerisate sind von faserig-filzigem Charakter. Eine Übertragung z. B. der antiadhäsiven und Gleiteigenschaften des PTFE auf andere Medien durch Einarbeitung in wäßrige oder organische Dispersionen, Polymere, Farben, Lacke, Harze oder Schmierstoffe ist nicht möglich, weil dieses PTFE sich nicht homogenisieren läßt, sondern zur Klumpenbildung neigt, agglomeriert, aufschwimmt oder sich absetzt.

Wegen der Unlöslichkeit des PTFE und seiner Abbauprodukte (mit Ausnahme der sehr niedermolekularen Produkte) können die üblichen Methoden der Molmassenbestimmung nicht angewandt werden. Die Molmassenbestimmung muß auf indirektem Wege erfolgen." [A. Heger et al., Technologie der Strahlenchemie an Polymeren, Akademie-Verlag Berlin 1990]

Nachteilig wirkt sich vielfach die Unverträglichkeit mit anderen Materialien aus. Durch eine chemische Aktivierung z. B. von PTFE durch die bekannten Verfahren mit (1.) Natriumamid in flüssigem Ammoniak und (2.) Alkalialkyl- und Alkali-Aromaten-Verbindungen in aprotischen inerten Lösungsmitteln ist eine Modifizierung zu erreichen. Über diese Modifizierungen können reaktiv oder auch nur über adsorptive Kräfte verbesserte Grenzflächenwechselwirkungen erreicht werden (Trends in Polymer Science; Cambridge, UK; TRIP Vol. 2, No. 1, January1994, 26 - 30).

Die Verwertung der Produkte des PTFE-Abbaus erfolgt in vielfältigen Einsatzgebieten - so auch als Additiv zu Kunststoffen zum Zwecke der Erzielung von Gleit- oder Antihafteigenschaften. Die Feinpulversubstanzen liegen mehr oder minder fein dispergiert als Füllstoffkomponente in einer Matrix vor [Ferse et al., Plaste u. Kautschuk, 29 (1982), 458; Ferse et al. DD-PS 146 716 (1979)]. Beim Lösen der Matrixkomponente ist das PTFE-Feinpulver eliminierbar bzw. wird unverändert zurückerhalten.

US 4 743 658 und EP 0220 910 beschreiben ein Verfahren zur Stabilisierung von Tetrafluorethylen-(co-)polymeren, in dem das (Co-)Polymer durch Fluorierung mit elementarem Fluor von unerwünschten, instabilen Endgruppen im Wesentlichen befreit wird, indem das (Co-)Polymer mit einem fluorhaltigen Gas behandelt und so stabilisiert wird (s. auch: Trends in Polymer Science; Cambridge, UK; TRIP Vol. 2, No. 1, January 1994, 26 - 30).

Obwohl in den Einsatzgebieten von PTFE-Feinpulver eine Verbesserung der Eigenschaften im Vergleich zu den kommerziellen fluorcarbonfreien Additiven erreicht wird, ist die Unverträglichkeit, die Unlöslichkeit, die Einlagerung und auch inhomogene Verteilung für viele Einsatzgebiete von Nachteil.

In Journal of Applied Polymer Science, Vol. 22, 2915-2924 (1978) wird die Copolymerisation von PTFE mit Monomeren beschrieben, indem durch mechanochemischen Kettenbruch von festem PTFE "Mechano-Radikate" erzeugt werden, die in einer Folgeumsetzung als Oberflächencopolymerisation am PTFE mit Methylmethacrylat, Vinylacetat und Ethylen Copolymere bilden. Die gepfropften Polymerketten wurden nach Abtrennung der löslichen Anteile als sehr schwache IR-Absorptionen nachgewiesen.

Weiterhin bekannt sind gepfropfte fluorhaltige Kunststoffe (US 5,576,106), die aus fluorhaltigen Kunststoffpartikeln bestehen, an deren Oberfläche eine nichthomopolymerisierte ethylenisch ungesättigte Verbindung angepfropft ist. Dabei können die nichthomopolymerisierten ethylenisch ungesättigten Verbindungen Säuren, Ester oder Anhydride sein.
Hergestellt werden diese gepfropften fluorhaltigen Kunststoffe, indem das fluorhaltige Kunststoffpulver in Gegenwart der ethylenisch ungesättigten Verbindung einer Quelle von ionisierender Strahlung ausgesetzt wird. Dabei erfolgt die Anbindung der ethylenisch ungesättigten Verbindungen an die Oberfläche der fluorhaltigen Kunststoffpartikel, was in zahlreichen Publikationen beschrieben wird.

Die Polymerisation von Tetrafluorethylen und Hinweise zur Arbeitssicherheit sind in "Methoden der Organischen Chemie" (Houben-Weyl), Band XIV/1, Makromolekulare Stoffe, Teil 1, S. 842 ff., Georg Thieme Verlag, Stuttgart 1961 und Methoden der Organischen Chemie" (Houben-Weyl), Band E 20, Makromolekulare Stoffe, S. 1028 ff., Georg Thieme Verlag, Stuttgart New York 1987 beschrieben.

Aufgabe der Erfindung ist es, Perfluorpolymer-Polymer-Materialien anzugeben, welche bei vergleichbaren Gleiteigenschaften verbesserte Verschleißfestigkeiten aufweisen und dadurch die Lebensdauer der Bauteile aus diesen Materialien verlängert ist und weiterhin ein einfaches und leistungsfähiges Verfahren zur Herstellung derartiger Materialien anzugeben.

Die Aufgabe wird durch die in den Ansprüchen angegebene Erfindung gelöst. Weiterbildungen sind Gegenstand der Unteransprüche.

Die erfindungsgemäßen, radikalisch gekoppelten Perfluorpolymer-Polymer-Materialien bestehen aus Perfluorpolymer an deren Perfluorpolymerketten olefinisch ungesättigte Monomere, die radikalisch gekoppelte (Meth-)Acrylsäure und/oder (Meth-)Acrylsäureester und/oder Styren und/oder Divinylbenzen und/oder Styrensulfonsäure und/oder deren Salz(e) und/oder CF₂=CF-C₆H₄-SO₃H und/oder deren Salz(e) und/oder CF₂=CF-O-(CF₂-CF(CF₃)-O)ₙ-(CF₂)ₘ-SO₂-F und/oder CF₂=CF-O-(CF₂-CF(CF₃)-O)ₙ-(CF₂)ₘ-SO₃H (mit m ≥ 1, n ≥ 0 und vorzugsweise n = 1 und m = 3) und/oder deren Salz(e) und/oder Vinylacetat und/oder (Meth-)Acrylnitril und/oder Glycidyl-(meth-)acrylat und/oder Hydroxyethyl-(meth-)acrylat und/oder (Meth-)Acrylamid-Derivate und/oder Maleinsäureanhydrid als Copolymereinheit mit mindestens einem weiteren Comonomer sind, und/oder Makromere und/oder Oligomere und/oder Polymere in Dispersion über eine reaktive Umsetzung chemisch radikalisch gekoppelt sind, wobei die zur radikalischen Kopplung notwendigen Radikale im Perfluorpolymer persistente aktive oder reaktivierbare Perfluoralkyl-(peroxy-)Radikale und/oder Radikale aus thermisch zerfallenen Gruppen sind, die nicht aus einem Bestrahlungsprozess und/oder einer Plasmamodifizierung stammen, und wobei mindestens zwei Monomer- und/oder Makromereinheiten und/oder ein Oligomer und/oder ein Polymer an einem Radikal gekoppelt sind.

Vorteilhafterweise stammen die persistenten reaktiven und/oder reaktivierbaren Perfluoralkyl-(peroxy-)Radikale und/oder die Radikale aus den thermisch zerfallenen Gruppen im Perfluorpolymer aus einem Polymerisationsprozess.

Vorteilhafterweise stammen die persistenten reaktiven und/oder reaktivierbaren Perfluoralkyl-(peroxy-)Radikale und/oder die Radikale aus den thermisch zerfallenen Gruppen im Perfluorpolymer aus einem Polymerisationsprozess, wobei keine Nachbehandlung der Produkte mit Sauerstoff und keine Nachbehandlung der Produkte zur Stabilisierung für höhere Verarbeitungstemperaturen erfolgt ist.

Vorteilhafterweise stammen die persistenten reaktiven und/oder reaktivierbaren PerFluoralkyl-(peroxy-)Radikale und/oder die Radikale aus den thermisch zerfallenen Gruppen im Perfluorpolymer aus einem Polymerisationsprozess unter Zudosierung von Sauerstoff ohne Nachbehandlung der Produkte zur Stabilisierung für höhere Verarbeitungstemperaturen.

Vorteilhafterweise stammen die persistenten reaktiven und/oder reaktivierbaren Perfluoralkyl-(peroxy-)Radikale und/oder die Radikale aus den thermisch zerfallenen Gruppen im Perfluorpolymer aus einem Polymerisationsprozess, wobei eine Nachbehandlung der Produkte mit Sauerstoff und keine Nachbehandlung der Produkte zur Stabilisierung für höhere Verarbeitungstemperaturen erfolgt ist.

Vorteilhafterweise stammen die persistenten reaktiven und/oder reaktivierbaren Perfluoralkyl-(peroxy-)Radikale und/oder die Radikale aus den thermisch zerfallenen Gruppen im Perfluorpolymer aus dem thermischen Abbau solcher Perfluorpolymere.

Vorteilhafterweise stammen die persistenten reaktiven und/oder reaktivierbaren Perfluoralkyl-(peroxy-)Radikale und/oder die Radikale aus den thermisch zerfallenen Gruppen im Perfluorpolymer aus dem thermischen Abbau solcher Perfluorpolymere, wobei keine Nachbehandlung der Produkte mit Sauerstoff und keine Nachbehandlung der Produkte zur Stabilisierung für höhere Verarbeitungstemperaturen erfolgt ist.

Vorteilhafterweise stammen die persistenten reaktiven und/oder reaktivierbaren Perfluoralkyl-(peroxy-)Radikale und/oder die Radikale aus den thermisch zerfallenen Gruppen im Perfluorpolymer aus dem thermischen Abbau solcher Perfluorpolymere, wobei eine Nachbehandlung der Produkte mit Sauerstoff und keine Nachbehandlung der Produkte zur Stabilisierung für höhere Verarbeitungstemperaturen erfolgt ist.

Ebenfalls von Vorteil ist es, wenn zur radikalischen Kopplung als Perfluorpolymer PTFE und/oder FEP und besonders bevorzugt PTFE eingesetzt sind.

Vorteilhafterweise sind als olefinisch ungesättigte Monomere und/oder Makromere und/oder Oligomere und/oder Polymere solche Substanzen, die mindestens eine olefinisch ungesättigte Gruppe besitzen, radikalisch gekoppelt.

Derartig vorteilhafte olefinisch ungesättigte Monomere sind radikalisch gekoppelte (Meth-)Acrylsäure und/oder (Meth-)Acrylsäureester und/oder Styren und/oder Divinylbenzen und/oder Styrensulfonsäure und/oder deren Salz(e) und/oder CF₂=CF-C₆H₄-SO₃H und/oder deren Salz(e) und/oder CF₂=CF-O-(CF₂-CF(CF₃)-O)ₙ-(CF₂)ₘ-SO₂-F und/oder CF₂=CF-O-(CF₂-CF(CF₃)-O)ₙ-(CF₂)ₘ-SO₃H (mit m ≥ 1, n ≥ 0 und vorzugsweise n = 1 und m = 3) und/oder deren Salz(e) und/oder Vinylacetat und/oder (Meth-)Acrylnitril und/oder Glycidyl-(meth-)acrylat und/oder Hydroxyethyl-(meth-)acrylat und/oder (Meth-)Acrylamid-Derivate und/oder Maleinsäureanhydrid als Copolymereinheit mit mindestens einem weiteren Comonomer.

Derartig vorteilhafte olefinisch ungesättigte Makromere sind radikalisch gekoppelte Polyether-(meth-)acrylate der Homo- oder Copolymeren aus Ethylenglycol- und/oder Propylenglycol- und/oder Butandioleinheiten.

Derartig vorteilhafte olefinisch ungesättigte Oligomere und/oder Polymere sind radikalisch gekoppelte SBS, ABS, SBR, NBR, NR sowie weitere Butadien- und/oder Isopren- und/oder Chloropren-Homo-, -Co- oder -Ter-Polymere.

Es ist auch vorteilhaft, wenn an die Perfluorpolymerkette des aus einem Polymerisationsprozess oder thermischen Abbau stammenden Oligo-/Polytetrafluorethylen perfluorierte Monomere mit funktionellen Gruppen radikalisch gekoppelt sind.

Auch ist es vorteilhaft, wenn eine Pfropfreaktion zum (Block-)Copolymerprodukt direkt im Anschluss an oder zeitlich versetzt nach der Polymerisation des Perfluorpolymers oder nach dem thermischen Abbau der Perfluorpolymere im Reaktionsgefäß oder in einem separaten Reaktor erfolgt ist.

Bei dem erfindungsgemäßen Verfahren zur Herstellung von radikalisch gekoppelten Perfluorpolymer-Polymer-Materialien werden Perfluorpolymere mit persistenten aktiven oder reaktivierbaren Perfluoralkyl-(peroxy-)Radikalen und/oder Radikalen aus thermisch zerfallenen Gruppen, die nicht aus einem Bestrahlungsprozess und/oder einer Plasmabehandlung stammen, in Dispersion unter Zugabe von olefinisch ungesättigten Monomer(en) und/oder Makromer(en) und/oder Oligomer(en) und/oder Polymer(en) reaktiv umgesetzt.

Vorteilhafterweise werden als Perfluorpolymer PTFE und/oder FEP und besonders bevorzugt PTFE eingesetzt.

Vorteilhafterweise ist es, wenn als Perfluorpolymer ein PTFE-Pulver eingesetzt wird.

Vorteilhafterweise ist es auch, wenn das PTFE-Pulver als ein Mikropulver eingesetzt wird.

Ebenfalls vorteilhafterweise wird eine Dispersion mit 1 bis 99 Masse-% an Feststoff eingesetzt.

Auch vorteilhafterweise werden zur Dispersion Additive und/oder Dispergierhilfsmittel und/oder reaktive Stoffe eingesetzt.

Vorteilhafterweise werden die, in das Verfahren eingesetzten, persistenten reaktiven und/oder reaktivierbaren Perfluoralkyl-(peroxy-)Radikale und/oder die Radikale aus thermisch zerfallenen Gruppen im Perfluorpolymer aus einem Polymerisationsprozess in einer Folgereaktion mit olefinisch ungesättigten Monomer(en) und/oder Makromer(en) und/oder Oligomer(en) und/oder Polymer(en) reaktiv umgesetzt.

Vorteilhafterweise werden die, in das Verfahren eingesetzten, persistenten reaktiven und/oder reaktivierbaren Perfluoralkyl-(peroxy-)Radikale und/oder die Radikale aus den thermisch zerfallenen Gruppen im Perfluorpolymer aus einem thermischen Abbau solcher Perfluorpolymere in einer Folgereaktion mit olefinisch ungesättigten Monomer(en) und/oder Makromer(en) und/oder Oligomer(en) und/oder Polymer(en) reaktiv umgesetzt.

Auch ist es vorteilhaft, wenn eine Pfropfreaktion direkt im Anschluss an oder zeitlich versetzt nach der Polymerisation des Perfluorpolymers direkt im Reaktionsgefäß oder in einem separaten Reaktor durchgeführt wird.

Auch ist es vorteilhaft, wenn eine Pfropfreaktion direkt im Anschluss an oder zeitlich versetzt nach dem thermischen Abbau solcher Perfluorpolymere direkt im Reaktionsgefäß oder in einem separaten Reaktor durchgeführt wird.

Vorteilhafterweise sind als olefinisch ungesättigte Monomere und/oder Makromere und/oder Oligomere und/oder Polymere solche Substanzen, die mindestens eine olefinisch ungesättigte Gruppe besitzen, eingesetzt.

Als derartig vorteilhafte olefinisch ungesättigte Monomere werden (Meth-)Acrylsäure und/oder (Meth-)Acrylsäureester und/oder Styren und/oder Divinylbenzen und/oder Styrensulfonsäure und/oder deren Salz(e) und/oder CF₂=CF-C₆H₄-SO₃H und/oder deren Salz(e) und/oder CF₂=CF-O-(CF₂-CF(CF₃)-O)ₙ-(CF₂)ₘ-SO₂-F und/oder CF₂=CF-O-(CF₂-CF(CF₃)-O)ₙ-(CF₂)ₘ-SO₃H (mit m,n ≥ 1 und vorzugsweise n = 1 und m = 3) und/oder deren Salz(e) und/oder Vinyl acetat und/oder (Meth-)Acrylnitril und/oder Glycidyl-(meth-)acrylat und/oder Hydroxyethyl-(meth-)acrylat und/oder (Meth-)Acrylamid-Derivate und/oder Maleinsäureanhydrid als Copolymereinheit mit mindestens einem weiteren Comonomer eingesetzt.

Als derartig vorteilhafte olefinisch ungesättigte Ma kromere werden Polyether-(meth-)acrylate der Homo- oder Copolymeren aus Ethylenglycol- und/oder Propylenglycol-und/oder Butandioleinheiten eingesetzt.

Weiterhin vorteilhafterweise werden als olefinisch ungesättigte Polymere solche Polymere, die olefinisch ungesättigte Gruppen in der Hauptkette und/oder in der Seitenkette besitzen, eingesetzt.

Als derartig vorteilhafte olefinisch ungesättigte Olig omere und/oder Polymere werden SBS, ABS, SBR, NBR, NR sowie weitere Butadien- und/oder Isopren- und/oder Chloropren-Homo-, -Co- oder -Ter-Polymere eingesetzt.

Es ist auch vorteilhaft, wenn an ein Perfluorpolymer-Polymer-Material weitere Monomer(en) und/oder Makromer(en) und/oder Oligomer(en) und/oder Polymer(en) mit oder ohne funktionellen Gruppen gekoppelt werden.

Zu den Perfluorpolymeren werden folgende Substanzen gezählt:
- Polytetrafluorethylen [PTFE],
- Poly(tetrafluorethylen-co-hexafluorpropylen) [FEP],
- Poly(tetrafluorethylen-co-perfluorpropylvinylether) [PFA],
- Poly(tetrafluorethylen-co-perfluor-2,2-dimtethyldioxol) sowie auch das
- Poly(chlortrifluorethylen) [PCTFE].

Unter Dispersion soll erfindungsgemäß verstanden werden, dass das Perfluorpolymer und vorzugsweise das PTFE-(Mikro-)Pulver in einer Flüssigkeit vollständig oder weitgehend ungelöst vorliegt und das Monomer-(Gemisch) und/oder Makromere und/oder Oligomere die Flüssigkeit bildet oder das olefinisch ungesättigte Monomere und/oder Makromere und/oder Oligomere und/oder Polymere gelöst in der Flüssigkeit vorliegt. Im Unterschuss an Flüssigkeit kann die Dispersion auch als pastöse Masse vorliegen.

Die erfindungsgemäße radikalische Kopplung von Perfluorpolymer mit olefinisch ungesättigten Monomeren und/oder Makromeren und/oder Oligomeren und/oder Polymeren in Dispersion führt zur Kompatibilisierung und/oder festen Einbindung in einer Matrix, was vorteilhaft für Tribowerkstoffe ausgenutzt werden kann.
Die Perfluorpolymere und die radikalisch gekoppelten Monomere und/oder Makromere und/oder Oligomere und/oder Polymere können als Blockcopolymere oder als Pfropfcopolymere vorliegen.

Bei den erfindungsgemäßen Perfluorpolymer-Polymer-Materialien müssen an den persistenten aktiven oder reaktivierbaren Perfluoralkyl-(peroxy-)Radikalen und/oder an den Radikalen der thermisch zerfallenen Gruppen mindestens jeweils zwei Monomer- und/oder Makromereinheiten und/oder ein Oligomer und/oder ein Polymer gekoppelt sein.

Das erfindungsgemäße radikalisch gekoppelte Perfluorpolymer-Polymer-Material kann zur Herstellung von Membranmaterialien, insbesondere von Brennstoffzellenmembranen eingesetzt werden.

So können spezielle Thermoplaste, Elastomere und spezielle Duromere mit den erfindungsgemäßen Perfluorpolymer-Polymer-Materialien und vorzugsweise PTFE-Polymer-Materialien in Schmelze oder in Dispersion mit weiteren Monomeren und/oder Makromeren und/oder Oligomeren und/oder Polymeren gemischt werden und/oder reaktiv umgesetzt werden.

Im Fall, dass diese Materialien als Tribowerkstoffe eingesetzt werden, besitzen die Produkte neben einer verbesserten Gleitreibung auch eine erhöhte Verschleißfestigkeit im Vergleich zu den reinen Ausgangsstoffen und den physikalischen Mischungen mit PTFE.

Bei der Herstellung von PTFE-Mikropulver, die nicht durch einen Bestrahlungsprozess und/oder einer Plasmamodifizierung modifiziert worden sind, entstehen persistente aktive oder reaktivierbare Perfluoralkyl-(peroxy-)Radikale und/oder Radikale aus thermisch zerfallenen Gruppen, die überraschenderweise zur Kopplung mit olefinisch ungesättigten Monomeren und/oder Makromeren und/oder Oligomeren und/oder Polymeren in einer reaktiven Umsetzung befähigt sind.

Dabei erfolgt die Herstellung der Perfluorpolymere und bevorzugt der PTFE-Mikropulver vorteilhafterweise in einem Polymerisationsprozess.

Dass die dabei entstehenden persistenten aktiven oder reaktivierbaren Perfluoralkyl-(peroxy-)Radikale und/oder Radikale aus thermisch zerfallenen Gruppen für die Kopplung mit olefinisch ungesättigten Monomeren und/oder Makromeren und/oder Oligomeren und/oder Polymeren in einer reaktiven Umsetzung geeignet sind, war besonders überraschend.

Über IR-Spektroskopie wurde nach der reaktiven Umsetzung in Dispersion beispielsweise von olefinisch ungesättigten Monomeren und/oder Makromeren und/oder Oligomeren mit einem, nicht aus einem Bestrahlungsprozess und/oder einer Plasmamodifizierung stammenden PTFE-Mikropulver und nach Abtrennung der ungebundenen Polymere ein chemisch gekoppeltes PTFE-Polymer-Material nachgewiesen; das Polymer war über Extraktion von diesem PTFE-Mikropulver nicht mehr abtrennbar.

Nach der reaktiven Umsetzung in Dispersion beispielsweise von Styren in Gegenwart geringer Mengen von Divinylbenzen mit einem nicht aus einem Bestrahlungsprozess und/oder einer Plasmamodifizierung stammenden PTFE-Mikropulver oder FEP und nach Abtrennung der ungebundenen Polymere wurde eine chemische Kopplung nachgewiesen. Das Polymer waren über Extraktion von diesem PTFE-Mikropulver oder dem FEP nicht mehr abtrennbar. In einer bekannten Umsetzung/Sulfonierungsreaktion wurden die PTFE-coStyrol- oder FEP-co-StyrolCopolymere zu den PTFE-coStyrolsulfonsäure- oder FEP-co-Styrolsulfonsäure-Copolymer-Produkten umgesetzt. Zur Herstellung von Membranmaterialien wird vorteilhaft das PTFE-coStyrol/Divinylbenzol- oder FEP-co-Styrol/Divinylbenzol-Copolymere als Perfluorpolymer-coStyrol/Divinylbenzol-Copolymer in einem ersten Schritt zum Membranmaterial verarbeitet und anschließend sulfoniert.

Über IR-Spektroskopie wurde nach der reaktiven Umsetzung in Schmelze oder in Dispersion (unter Zusatz eines Lösemittels) beispielsweise für SBS, ABS und auch olefinisch ungesättigte Elastomere, wie SBR, NBR, NR, Polybutadien, Chloropren mit einem nicht aus einem Bestrahlungsprozess und/oder einer Plasmamodifizierung stammenden PTFE-Mikropulver und nach Abtrennung der ungebundenen Matrix eine chemische Kopplung nachgewiesen. Die Polymere waren über Extraktion von diesem PTFE-Mikropulver nicht mehr abtrennbar.

Der erfindungsgemäße Effekt, dass eine derartige Kopplung überhaupt zwischen einem PTFE-Mikropulver, welches nicht durch einen Bestrahlungsprozess und/oder einer Plasmamodifizierung modifiziert worden ist, und olefinisch ungesättigten Monomeren und/oder Makromeren und/oder Oligomeren und/oder Polymeren erreicht werden kann, wird auch ohne eine strahlenchemische und/oder Plasmabehandlung erreicht.

Die erfindungsgemäße radikalische Kopplung des vorzugsweise eingesetzten PTFE und die dadurch erfolgte reaktive Einbindung und/oder Kompatibilisierung mit einer Matrix führt zur Verbesserung der Material- und der Gleitreibungseigenschaften sowie zur Erhöhung der Verschleißfestigkeit im Vergleich zu den unmodifizierten Ausgangsstoffen und den physikalischen Mischungen mit PTFE. Zur Verbesserung der Verschleißfestigkeit in tribologischen Anwendungen ist es weiter vorteilhaft, die chemisch gekoppelten PTFE-Partikel gleichzeitig als Speichermedium für das PFPE-Additiv (PFPE = Perfluorpolyether) zu nutzen, das mit der Polymermatrix unverträglich ist und zur Erniedrigung des Reibungskoeffizienten bei gleichzeitiger Erhöhung der Verschleißfestigkeit beiträgt. unverträglich ist und zur Erniedrigung des Reibungskoeffizienten bei gleichzeitiger Erhöhung der Verschleißfestigkeit beiträgt.

Durch die chemische Kopplung weisen diese Produkte verbesserte mechanische und tribologische Eigenschaften auf. Diese Produkte sind vor allem von Interesse für Gleitreibungsprozesse. Durch die radikalische Modifizierung/Kompatibilisierung des PTFE-Partikels mit dem Matrix-Material wird eine gute Anbindung und eine Verbesserung der Verschleißfestigkeit erreicht, da das PTFE-Korn nicht durch mechanische Beanspruchung aus dem Matrix-Material herausgerieben werden kann. Da das PTFE-Korn in direkter Wechselwirkung mit der Matrix steht, werden im Vergleich zu den physikalischen Mischungen je nach Anbindungsgrad auch verbesserte Materialeigenschaften beobachtet.

Mit der chemischen Kopplung des PTFE in der Matrix werden neue Materialien erhalten, die bei vergleichbaren Gleitreibungskoeffizienten verbesserte Verschleißfestigkeiten, d. h. eine erhöhte Lebensdauer in den Anwendungen aufweisen. Ferner wird durch Zugabe von PFPE eine weitere Erniedrigung der Gleitreibungskoeffizienten und eine spürbare Verbesserung der Verschleißfestigkeit erzielt, wobei das chemisch gekoppelte PTFE zusätzlich als Speichermedium fungiert.

Im Weiteren wird die Erfindung an mehreren Ausführungsbeispielen näher erläutert.

Herstellung von Perfluorpolymeren mit persistenten reaktiven und/oder reaktivierbaren Perfluoralkyl-(peroxy-)Radikalen und/oder thermisch zu Radikalen zerfallenden Gruppen:

Polymerisation des PTFE(1)*: Polymerisation von Tetrafluorethylen [TFE] zu PTFE mit aktiven Radikalen:

In einem 1l Glas-Autoklaven mit Rührer werden 450 ml entionisiertes Wasser vorgelegt, unter Rühren im Wechsel mehrfach evakuiert und mit Reinst-Argon gespült und auf 10°C gekühlt. Unter ständiger Reaktionstemperaturkontrolle wird evakuiert und der Autoklav mit TFE gespült. Nacheinander werden unter Rühren wässrige, luftfreie Lösungen aus 60 mg NaHSO₃, 2 mg FeSO₄·7 H₂O und 125 mg (NH₄)₂S₂O₈ zudosiert. Unmittelbar danach wird der Autoklav noch einmal evakuiert und es werden 0,3 MPa TFE zugegeben. Mit der Polymerisation sinkt der TFE-Druck, der ständig wieder auf 0,3 MPa ausgeglichen wird. Mit Bildung der PTFE(1)*-Suspension wird die Polymerisation abgebrochen, indem die Rührung eingestellt und das TFE abgelassen wird. Der Autoklav wird evakuiert und mit Reinst-Argon gespült. PTFE-Produkt für weitere Versuchte → PTFE(1)*

Polymerisation von PTFE(2)*: Polymerisation von Tetrafluorethylen [TFE] zu PTFE unter Zudosierung von definierten, geringen Mengen Sauerstoff nach bestimmten Polymerisationszeiten:
In einem 1l Glas-Autoklaven mit Rührer werden 450 ml entionisiertes Wasser vorgelegt, unter Rühren im Wechsel mehrfach evakuiert und mit Reinst-Argon gespült und auf 10°C gekühlt. Unter ständiger Reaktionstemperaturkontrolle wird evakuiert und der Autoklav mit TFE gespült. Nacheinander werden unter Rühren wässrige, luftfreie Lösungen aus 60 mg NaHSO₃, 2 mg FeSO₄·7 H₂O und 125 mg (NH₄)₂S₂O₈ zudosiert. Unmittelbar danach werden 0,3 MPa TFE zugegeben. Mit der Polymerisation sinkt der TFE-Druck, der ständig wieder auf 0,3 MPa ausgeglichen wird. Nach 30 min Polymerisationszeit wird das TFE abgesaugt und es werden 0,2 MPa Argon mit geringen Anteilen Sauerstoff (0,5 Vol.-%) zugegeben, 5 min gerührt und wieder unter Anlegen von Vakuum abgesaugt. Danach werden wieder 0,3 MPa TFE zugegeben und unter Rühren und Aufrechterhalten des TFE-Druckes weitere 30 min polymerisiert. Diese Operation wird solange wiederholt, bis sich eine PTFE(2)*-Suspension gebildet hat. Die Polymerisation wird abgebrochen, indem die Rührung eingestellt und das TFE abgelassen wird. Der Autoklav wird evakuiert und mit Reinst-Argon gespült.
PTFE-Produkt für weitere Versuchte → PTFE(2)*

Polymerisation des FEP(1)*: Copolymerisation von TFE + Hexafluorpropylen [HFP] zu FEP mit aktiven Radikalen:
Die Umsetzung wird wie bei Polymerisation des PTFE(1)* durchgeführt, nur wird anstelle des TFE ein Gemisch an TFE : HEP von 5 : 1 zudosiert.
FEP-Produkt für weitere Versuche → FEP(1)*

Polymerisation von FEP(2)*: Copolymerisation von TFE + Hexafluorpropylen [HFP] zu FEP:
Die Umsetzung wird wie bei Polymerisation von PTFE(2)* durchgeführt, nur wird anstelle des TFE ein Gemisch an TFE : HEP von 5 : 1 zudosiert.
FEP-Produkt für weitere Versuche → FEP(2)*

Polymerisation des PTFE(3)*: Polymerisation von Tetrafluorethylen [TFE] zu PTFE durch Zusatz von halogenierten Kohlenwasserstoffen mit aktiven Radikalen:
In einem 1l Glas-Autoklaven mit Rührer werden 450 ml entionisiertes Wasser und 25 g Tetrafluor-1,2-dichlorethan vorgelegt, unter Rühren im Wechsel mehrfach evakuiert und mit Reinst-Argon gespült und auf 10°C gekühlt. Unter ständiger Reaktionstemperaturkontrolle wird evakuiert und der Autoklav mit TFE gespült.
Nacheinander werden unter Rühren wässrige, luftfreie Lösungen aus 60 mg NaHSO₃, 2 mg FeSO₄·7 H₂O und 125 mg (NH₄)₂S₂O₈ zudosiert. Unmittelbar danach wird der Autoklav noch einmal evakuiert und es werden 0,3 MPa TFE zugegeben. Mit der Polymerisation sinkt der TFE-Druck, der ständig wieder auf 0,3 MPa ausgeglichen wird. Mit Bildung der sichtbaren PTFE(3)*-Emulsion wird die Polymerisation abgebrochen, indem die Rührung eingestellt und das TFE abgelassen wird. Der Autoklav wird evakuiert und mit Reinst-Argon gespült.
PTFE-Produkt für weitere Versuchte → PTFE(3)*

Polymerisation von PTFE(4)*: Polymerisation von Tetrafluorethylen [TFE] zu PTFE durch Zusatz von halogenierten Kohlenwasserstoffen unter Zudosierung von definierten, geringen Mengen Sauerstoff nach bestimmten Polymerisationszeiten:
In einem 1l Glas-Autoklaven mit Rührer werden 450 ml entionisiertes Wasser und 25 g Tetrafluor-1,2-dichlorethan vorgelegt, unter Rühren im Wechsel mehrfach evakuiert und mit Reinst-Argon gespült und auf 10°C gekühlt. Unter ständiger Reaktionstemperaturkontrolle wird evakuiert und der Autoklav mit TFE gespült.
Nacheinander werden unter Rühren wässrige, luftfreie Lösungen aus 60 mg NaHSO₃, 2 mg FeSO₄·7 H₂O und 125 mg (NH₄)₂S₂O₈ zudosiert. Unmittelbar danach werden 0,3 MPa TFE zugegeben. Mit der Polymerisation sinkt der TFE-Druck, der ständig wieder auf 0,3 MPa ausgeglichen wird. Nach 30 min Polymerisationszeit wird das TFE abgesaugt und es werden 0,2 MPa Argon mit geringen Anteilen Sauerstoff (0,5 Vol.-%) zugegeben, 5 min gerührt und wieder unter Anlegen von Vakuum abgesaugt. Danach werden wieder 0,3 MPa TFE zugegeben und unter Rühren und Aufrechterhalten des TFE-Druckes weitere 30 min polymerisiert. Diese Operation wird solange wiederholt, bis eine sichtbare PTFE(4)*-Emulsion vorliegt. Die Polymerisation wird abgebrochen, indem die Rührung eingestellt und das TFE abgelassen wird. Der Autoklav wird evakuiert und mit Reinst-Argon gespült.
PTFE-Produkt für weitere Versuchte → PTFE(4)*

### Beispiel 1: Copolymerisation von PTFE(1)* mit Acrylsäure [AAc] zum PTFE-coPAAc:

Die PTFE(1)*-Suspension wird auf 100°C erwärmt und unter Rühren werden 50 ml frisch destillierte und entgaste Acrylsäure zudosiert. Die Reaktionslösung wird 2 Stunden bei 100°C intensiv gerührt. Nach dem Abkühlen wird das Festprodukt eliminiert und gründlich mit Wasser und anschließend mit Methanol gewaschen und getrocknet.
Die IR-spektroskopische Untersuchung ergab, dass am PTFE Polyacrylsäure [PAAc] gepfropft vorliegt, die nicht durch Reinigungsoperationen abgetrennt werden kann, d. h. es hat sich die PTFE-coPAAc gebildet.

Das PTFE-coPAAc-Produkt wird in Dimethylacetamid (DMAc) dispergiert und mit Phenylglycidether in Gegenwart katalytischer Mengen an 2-Methylimidazol bei 130°C 2 Stunden gerührt. Nach der Abtrennung und Reinigung des Festprodukts wurden IR-spektroskopisch Esterabsorptionen festgestellt, d. h. das gepfropfte PAAc wird zum größten Teil verestert als Modellreaktion für die reaktive Einbindung in Epoxidharze.
Nach Einmischen des PTFE-coPAAc-Produktes in ein Epoxidharz weisen diese chemisch gekoppelten Produkte im Vergleich zu physikalischen Mischungen verbesserte tribologische Eigenschaften auf.

### Beispiel 2: Copolymerisation von PTFE(2)* mit Vinylacetat [VAc] zum PTFE-coPVAc:

Die PTFE(2)*-Dispersion wird auf 100°C erwärmt und unter Rühren werden 50 ml frisch destilliertes und entgastes Vinylacetat zudosiert. Die Reaktionslösung wird 2 Stunden bei 100°C intensiv gerührt. Nach dem Abkühlen wird das Festprodukt eliminiert und gründlich mit Wasser gewaschen.

Die IR-spektroskopische Untersuchung ergab, dass am PTFE Polyvinylacetat [PVAc] gepfropft vorliegt, die nicht durch Reinigungsoperationen abgetrennt werden kann, d. h. es hat sich die PTFE-coPVAc gebildet.
5 g PTFE-coPVAc werden in einer Lösung aus 200 ml Wasser/Methanol (1:1) und 5 g KOH 10 Stunden unter Rückflusserhitzung gerührt. Das Festprodukt wird abgetrennt, mit Wasser und anschließend mit Methanol gewaschen und getrocknet. Die IR-Untersuchung ergab neben den PTFE-Absorptionen OH-Absorptionen aus dem großteils hydrolysierten PTFE-coPVAc als PTFE-coPVAI (PVAI = Polyvinylalkohol).
2 g gereinigtes und getrocknetes PTFE-coPVAI werden in DMAc dispergiert, mit Cyclohexylisocyanat versetzt und 30 min bei 100°C gerührt. Nach der Abtrennung und Reinigung des Festprodukts werden IR-spektroskopisch Urethan-Absorptionen nachgewiesen als Modellreaktion für die reaktive Einbindung in duromere und thermoplastische Polyurethane.
Nach Einmischen des PTFE-coPVAI-Produktes in ein Polyurethan weisen diese chemisch gekoppelten Produkte im Vergleich zu physikalischen Mischungen verbesserte tribologische Eigenschaften auf.

Beispiel 3: Copolymerisation von PTFE(2)* mit Hydroxyethylmethacrylat [HEMA] zum PTFE-coPoly-HEMA:
Aus der PTFE(2)*-Dispersion wird das PTFE-Festprodukt eliminiert und mit Wasser und Methanol gewaschen. 5 g getrocknetes PTFE-Festprodukt PTFE(2)* werden in 100 ml DMAc dispergiert, entgast und auf 100°C erwärmt. Unter Rühren werden 25 ml frisch destilliertes und entgastes HEMA zudosiert. Die Reaktionslösung wird 2 Stunden bei 100°C intensiv gerührt. Nach dem Abkühlen wird das Festprodukt eliminiert und gründlich mit DMAc, Wasser und Methanol gewaschen.
Die IR-spektroskopische Untersuchung ergab, dass am PTFE Poly-HEMA gepfropft vorliegt, das nicht durch Reinigungsoperationen abgetrennt werden kann, d. h. es hat sich die PTFE-coPoly-HEMA gebildet. 2 g gereinigtes und getrocknetes PTFE-coPoly-HEMA werden in DMAc dispergiert und mit Cyclohexylisocyanat versetzt. Nach der Abtrennung und Reinigung des Festprodukts werden IR-spektroskopisch Urethan-Absorptionen nachgewiesen als Modellreaktion für die reaktive Einbindung in duromere und thermoplastische Polyurethane.

Nach Einmischen des PTFE-coPoly-HEMA-Produktes in ein Polyurethan weisen diese chemisch gekoppelten Produkte im Vergleich zu physikalischen Mischungen verbesserte tribologische Eigenschaften auf.

### Beispiel 4: Copolymerisation von PTFE(3)* mit Glycidylmethacrylat [GMA] zum PTFE-coPoly-GMA:

Das PTFE(3)* wird aus der PTFE(3)*-Emulsion eliminiert, gereinigt und getrocknet. 25 g PTFE(3)*-Festprodukt werden in 150 ml DMAc dispergiert, entgast, mit Reinst-Argon gespült und auf 100°C erwärmt. Zur Dispersion werden 50 ml frisch destilliertes und entgastes GMA zudosiert. Die Dispersion wird 2 Stunden bei 120°C intensiv gerührt. Nach dem Abkühlen wird das Festprodukt eliminiert und gründlich mit Aceton und Methanol gewaschen. Die IR-spektroskopische Untersuchung des Festproduktes ergab, dass am PTFE Poly-GMA gepfropft vorliegt, das nicht durch Reinigungsoperationen abgetrennt werden kann, d. h. es hat sich die PTFE-coPoly-GMA gebildet.
In einem Laborkneter werden 45 g PA-6 bei 250°C und 100 rpm aufgeschmolzen, und es werden in die Schmelze 10 g PTFE-coPoly-GMA langsam zudosiert. Der Laborkneterversuch wird 5 min nach Zugabe des PTFE-coPoly-GMA abgebrochen und das PTFE-PA-6-Material aus dem Laborkneter eliminiert.
Zur Abtrennung des ameisensäurelöslichen Anteils werden 5 g Produkt aus PA-6 und PTFE-coPoly-GMA in Ameisensäure gelöst und durch Zentrifugieren (5 Mal mit Ameisensäure behandeln und zentrifugieren) wird das Festprodukt abgetrennt, mit Methanol gewaschen und getrocknet. IR-spektroskopisch ist neben dem PTFE nicht abtrennbares PA-6 nachweisbar.
30 g PTFE-PA-6-Material aus dem Laborkneterversuch werden zu einem Block verpresst und im Vergleich zu einem Block aus reinem PA-6 im Prüfsystem Klötzchen-Ring auf die tribologischen Eigenschaften untersucht. Das reine PA-6 zeigte ein starkes Stick-Slip-Verhalten bei einem Reibwert von ca. 0,6 bis 0,7. Das chemisch gekoppelte PTFE-PA-6-Material hingegen hatte einen Reibwert von 0,18 und zeigte ein sehr ruhiges Laufverhalten. Der Verschleiß des PTFE-PA-6-Materials sinkt um 60 % gegenüber dem reinen PA-6.

### Beispiel 5: Copolymerisation von PTFE(4)* mit Hydroxyethylmethacrylat [HEMA] zum PTFE-coPoly-HEMA:

Aus der PTFE(4)*-Emulsion wird das PTFE-Festprodukt eliminiert und mit Wasser und Methanol gewaschen. 10 g getrocknetes PTFE-Festprodukt PTFE(4)* werden in 100 ml DMAc dispergiert, entgast und auf 100°C erwärmt. Unter Rühren werden 25 ml frisch destilliertes und entgastes HEMA zudosiert. Die Reaktionslösung wird 2 Stunden bei 100°C intensiv gerührt. Nach dem Abkühlen wird das Festprodukt eliminiert und gründlich mit DMAc, Wasser und Methanol gewaschen und getrocknet. Die IR-spektroskopische Untersuchung ergab, dass am PTFE Poly-HEMA gepfropft vorliegt, das nicht durch Reinigungsoperationen abgetrennt werden kann, d. h. es hat sich die PTFE-coPoly-HEMA gebildet.
In einem Laborkneter werden 45 g TPU (thermoplastisches Polyurethan) bei 190°C und 80 rpm aufgeschmolzen. Zur Schmelze werden 10 g gut getrocknetes PTFE-coPoly-HEMA langsam zudosiert. Der Laborkneterversuch wird 5 min nach Zugabe des PTFE-coPoly-HEMA abgebrochen. 10 g Laborkneterprodukt werden in 50 ml DMAc gelöst. Nach Abtrennung der löslichen TPU-Komponente durch mehrfaches Waschen mit DMAc, d. h. mehrfacher Reinigung werden IR-spektroskopisch neben den PTFE-Absorptionen Urethan-Absorptionen nachgewiesen, d. h. an das PTFE-Festprodukt liegt gekoppeltes TPU vor.
Nach Einmischen des PTFE-coPoly-HEMA-Produktes in ein TPU weisen diese chemisch gekoppelten Produkte im Vergleich zu physikalischen Mischungen verbesserte tribologische Eigenschaften auf.

### Beispiel 6: Umsetzung von PTFE(4)* mit SBS zum PTFE-coSBS:

Das PTFE(4)* wird aus der PTFE(4)*-Emulsion eliminiert und anschließend gründlich mit Wasser und dann mit Methanol gewaschen. Das abgesaugte PTFE(4)*-Festprodukt wird an Luft bei 40°C getrocknet.
5 g getrocknetes PTFE-Festprodukt PTFE(4)* werden in 100 ml Xylol dispergiert. Es werden 25 g SBS zugegeben, unter Rühren gelöst, entgast und auf 120°C erwärmt.
Die Reaktionslösung wird 2 Stunden bei 120°C intensiv gerührt. Nach dem Abkühlen wird das Festprodukt eliminiert und gründlich mit Xylol gewaschen. Anschließend wird das Festprodukt mit Aceton gewaschen und getrocknet. Die IR-spektroskopische Untersuchung ergab, dass am PTFE SBS gekoppelt vorliegt, das nicht durch Reinigungsoperationen abgetrennt werden kann, d. h. es hat sich das chemisch gekoppelte PTFE-coSBS gebildet.
Nach Einmischen des PTFE-coSBS-Produktes in ein SBS weisen diese chemisch gekoppelten Produkte im Vergleich zu physikalischen Mischungen verbesserte tribologische Eigenschaften auf.

### Beispiel 7: Copolymerisation von FEP(1)* mit Styrol (S) und Divinylbenzol (DVB) zum FEP-coPolystyrol/DVB:

Aus der FEP(1)*-Dispersion wird das FEP-Festprodukt eliminiert und mit Wasser und Methanol gewaschen. 20 g getrocknetes FEP-Festprodukt FEP(1)* werden in DMAc dispergiert, entgast und auf 100°C erwärmt. Unter Rühren werden 25 ml frisch destilliertes und entgastes Styrol, das mit 2 Ma.-% DVB versetzt ist, zudosiert. Die Reaktionslösung wird 2 Stunden bei 100°C intensiv gerührt. Nach dem Abkühlen wird das Festprodukt eliminiert und gründlich mit DMAc, Wasser und Methanol gewaschen.
Die IR-spektroskopische Untersuchung ergab, dass am FEP Polystyrol gepfropft vorliegt, das nicht durch Reinigungsoperationen abgetrennt werden kann, d. h. es hat sich die FEP-coPolystyrol/DVB gebildet.
Das FEP-coPolystyrol/DVB-Material wird zu einer Folie verpresst. Dieser Film wird in einer Methylenchlorid-Lösung mit ca. 2 Vol.-% Chlorsulfonsäure bei Raumtemperatur sulfoniert. Nach der Reinigung der Folie und mehrfachem Waschen mit Methanol und Wasser wurde über Zeta-Potenzial-Messungen festgestellt, dass eine in Wasser benetzbare, quellfähige Membran mit sauren Gruppen, d. h. mit Sulfonsäuregruppen funktionalisiert vorliegt. Diese Membran ist ohne weitere Bearbeitungsschritte in Brennstoffzellen einsetzbar.

### Beispiel 8: Copolymerisation von FEP(2)* mit Styrol (S) und Divinylbenzol (DVB) zum FEP-coPolystyrol/DVB:

Aus der FEP(2)*-Dispersion wird das FEP-Festprodukt eliminiert und mit Wasser und Methanol gewaschen. 20 g getrocknetes FEP-Festprodukt FEP(2)* werden in DMAc dispergiert, entgast und auf 100°C erwärmt. Unter Rühren werden 25 ml frisch destilliertes und entgastes Styrol, das mit 5 Ma.-% DVB versetzt ist, zudosiert. Die Reaktionslösung wird 2 Stunden bei 100°C intensiv gerührt. Nach dem Abkühlen wird das Festprodukt eliminiert und gründlich mit DMAc, Wasser und Methanol gewaschen.
Die IR-spektroskopische Untersuchung ergab, dass am FEP Polystyrol gepfropft vorliegt, das nicht durch Reinigungsoperationen abgetrennt werden kann, d. h. es hat sich die FEP-coPolystyrol/DVB gebildet.
Das FEP-coPolystyrol/DVB-Material wird mit unmodifiziertem FEP-Pulver im Verhältnis von 1 : 3 gemischt und zu einer Folie verpresst. Dieser Film wird in einer Methylenchlorid-Lösung mit ca. 2 Vol.-% Chlorsulfonsäure bei Raumtemperatur sulfoniert. Nach der Reinigung der Folie und mehrfachem Waschen mit Methanol und Wasser wurde über Zeta-Potenzial-Messungen festgestellt, dass eine in Wasser benetzbare, quellfähige Membran mit sauren Gruppen, d. h. mit Sulfonsäuregruppen funktionalisiert vorliegt. Diese Membran ist ohne weitere Bearbeitungsschritte in Brennstoffzellen einsetzbar.

### Beispiel 9: Copolymerisation von FEP(2)* mit Glycidylmethacrylat [GMA] zum FEP-coPoly-GMA:

Das FEP(2)* wird aus der FEP(2)*-Dispersion eliminiert, gereinigt und getrocknet.
25 g FEP(2)*-Festprodukt werden in 150 ml DMAc dispergiert, entgast, mit Reinst-Argon gespült und auf 100°C erwärmt. Zur Dispersion werden 50 ml frisch destilliertes und entgastes GMA zudosiert. Die Dispersion wird 2 Stunden bei 120°C intensiv gerührt. Nach dem Abkühlen wird das Festprodukt eliminiert und gründlich mit Aceton und Methanol gewaschen. Die IR-spektroskopische Untersuchung des Festproduktes ergab, dass am FEP Poly-GMA gepfropft vorliegt, das nicht durch Reinigungsoperationen abgetrennt werden kann, d. h. es hat sich die FEP-coPoly-GMA gebildet.
In einem Laborkneter werden 45 g PA-6.6 bei 290°C und 100 rpm aufgeschmolzen, und es werden in die Schmelze 10 g FEP-coPoly-GMA langsam zudosiert. Der Laborkneterversuch wird 5 min nach Zugabe des FEP-coPoly-GMA abgebrochen. Zur Abtrennung des ameisensäurelöslichen Anteils werden 5 g Produkt aus PA-6.6 und FEP-coPoly-GMA in Ameisensäure gelöst und durch Zentrifugieren (5 Mal mit Ameisensäure behandeln und zentrifugieren) wird das Festprodukt abgetrennt, mit Methanol gewaschen und getrocknet. IR-spektroskopisch ist neben dem FEP nicht abtrennbares PA-6.6 nachweisbar.
30 g FEP-PA-6.6-Material aus dem Laborkneterversuch werden zu einem Block verpresst und im Vergleich zu einem Block aus reinem PA-6.6 im Prüfsystem Klötzchen-Ring auf die tribologischen Eigenschaften untersucht. Das reine PA-6.6 zeigte ein starkes Stick-Slip-Verhalten bei einem Reibwert von ca. 0,5 bis 0,6. Das chemisch gekoppelte FEP-PA-6.6-Material hingegen hatte einen Reibwert von 0,15 und zeigte ein sehr ruhiges Laufverhalten. Der Verschleiß des FEP-PA-6.6-Materials sinkt um 80 % gegenüber dem reinen PA-6.6.

## Patentansprüche

1. Radikalisch gekoppelte Perfluorpolymer-Polymer-Materialien, bestehend aus Perfluorpolymer, an deren Perfluorpolymerketten olefinisch ungesättigte Monomere, die radikalisch gekoppelte (Meth-)Acrylsäure und/oder (Meth-)Acrylsäureester und/oder Styren und/oder Divinylbenzen und/oder Styrensulfonsäure und/oder deren Salz(e) und/oder CF₂=CF-C₆H₄-SO₃H und/oder deren Salz(e) und/oder CF₂=CF-O-(CF₂-CF(CF₃)-O)ₙ-(CF₂)ₘ-SO₂-F und/oder CF₂=CF-O-(CF₂-CF(CF₃)-O)ₙ-(CF₂)ₘ-SO₃H (mit m ≥ 1, n ≥ 0 und vorzugsweise n = 1 und m = 3) und/oder deren Salz(e) und/oder Vinylacetat und/oder (Meth-)Acrylnitril und/oder Glycidyl-(meth-)acrylat und/oder Hydroxyethyl-(meth-)acrylat und/oder (Meth-)Acrylamid-Derivate und/oder Maleinsäureanhydrid als Copolymereinheit mit mindestens einem weiteren Comonomer sind, und/oder Makromere und/oder Oligomere und/oder Polymere in Dispersion über eine reaktive Umsetzung chemisch radikalisch gekoppelt sind, wobei die zur radikalischen Kopplung notwendigen Radikale im Perfluorpolymer persistente aktive oder reaktivierbare Perfluoralkyl-(peroxy-)Radikale und/oder Radikale aus thermisch zerfallenen Gruppen sind, die nicht aus einem Bestrahlungsprozess und/oder einer Plasmamodifizierung stammen, und wobei mindestens zwei Monomer- und/oder Makromereinheiten und/oder ein Oligomer und/oder ein Polymer an einem Radikal gekoppelt sind.

2. Radikalisch gekoppelte Perfluorpolymer-Polymer-Materialien nach Anspruch 1, bei denen die persistenten reaktiven und/oder reaktivierbaren Perfluoralkyl-(peroxy-)Radikale und/oder die Radikale aus den thermisch zerfallenen Gruppen im Perfluorpolymer aus einem Polymerisationsprozess stammen.

3. Radikalisch gekoppelte Perfluorpolymer-Polymer-Materialien nach Anspruch 1, bei denen die persistenten reaktiven und/oder reaktivierbaren Perfluoralkyl-(peroxy-)Radikale und/oder die Radikale aus den thermisch zerfallenen Gruppen im Perfluorpolymer aus einem Polymerisationsprozess ohne Zudosierung von Sauerstoff und ohne Nachbehandlung der Produkte zur Stabilisierung für höhere Verarbeitungstemperaturen stammen.

4. Radikalisch gekoppelte Perfluorpolymer-Polymer-Materialien nach Anspruch 1, bei denen die persistenten reaktiven und/oder reaktivierbaren Perfluoralkyl-(peroxy-)Radikale und/oder die Radikale aus den thermisch zerfallenen Gruppen im Perfluorpolymer aus einem Polymerisationsprozess unter Zudosierung von Sauerstoff und ohne Nachbehandlung der Produkte zur Stabilisierung für höhere Verarbeitungstemperaturen stammen.

5. Radikalisch gekoppelte Perfluorpolymer-Polymer-Materialien nach Anspruch 1, bei denen die persistenten reaktiven und/oder reaktivierbaren Perfluoralkyl-(peroxy-)Radikale und/oder die Radikale aus den thermisch zerfallenen Gruppen im Perfluorpolymer aus dem thermischen Abbau solcher Perfluorpolymere stammen.

6. Radikalisch gekoppelte Perfluorpolymer-Polymer-Materialien nach Anspruch 1, bei denen die persistenten reaktiven und/oder reaktivierbaren Perfluoralkyl-(peroxy-)Radikale und/oder die Radikale aus den thermisch zerfallenen Gruppen im Perfluorpolymer aus dem thermischen Abbau solcher Perfluorpolymere stammen, wobei keine Nachbehandlung der Produkte mit Sauerstoff und keine Nachbehandlung der Produkte zur Stabilisierung für höhere Verarbeitungstemperaturen erfolgt ist.

7. Radikalisch gekoppelte Perfluorpolymer-Polymer-Materialien nach Anspruch 1, bei denen die persistenten reaktiven und/oder reaktivierbaren Perfluoralkyl-(peroxy-)Radikale und/oder die Radikale aus den thermisch zerfallenen Gruppen im Perfluorpolymer aus dem thermischen Abbau solcher Perfluorpolymere stammen, wobei eine Nachbehandlung der Produkte mit Sauerstoff und keine Nachbehandlung der Produkte zur Stabilisierung für höhere Verarbeitungstemperaturen erfolgt ist.

8. Radikalisch gekoppelte Perfluorpolymer-Polymer-Materialien nach Anspruch 1, bei denen zur radikalischen Kopplung als Perfluorpolymer PTFE und/oder FEP eingesetzt sind.

9. Radikalisch gekoppelte Perfluorpolymer-Polymer-Materialien nach Anspruch 8, bei denen zur radikalischen Kopplung als Perfluorpolymer PTFE eingesetzt ist.

10. Radikalisch gekoppelte Perfluorpolymer-Polymer-Materialien nach Anspruch 1, bei denen als olefinisch ungesättigte Monomere und/oder Makromere und/oder Oligomere und/oder Polymere solche Substanzen, die mindestens eine olefinisch ungesättigte Gruppe besitzen, radikalisch gekoppelt sind.

11. Radikalisch gekoppelte Perfluorpolymer-Polymer-Materialien nach Anspruch 1, bei denen olefinisch ungesättigte Makromere radikalisch gekoppelte Polyether-(meth-)acrylate der Homo- oder Copolymeren aus Ethylenglycol- und/oder Propylenglycol- und/oder Butandioleinheiten sind.

12. Radikalisch gekoppelte Perfluorpolymer-Polymer-Materialien nach Anspruch 1, bei denen olefinisch ungesättigte Oligomere und/oder Polymere radikalisch gekoppelte SBS, ABS, SBR, NBR, NR sowie weitere Butadien- und/oder Isoprenund/oder Chloropren-Homo-, -Co- oder -Ter-Polymere sind.

13. Radikalisch gekoppelte Perfluorpolymer-Polymer-Materialien nach Anspruch 1, bei denen an die Perfluorpolymerkette des aus einem Polymerisationsprozess oder thermischen Abbau stammenden Oligo-/Polytetrafluorethylens perfluorierte Monomere mit funktionellen Gruppen radikalisch gekoppelt sind.

14. Radikalisch gekoppelte Perfluorpolymer-Polymer-Materialien nach Anspruch 1, bei denen eine Pfropfreaktion zum (Block-)Copolymerprodukt direkt im Anschluss an oder zeitlich versetzt nach der Polymerisation des Perfluorpolymers oder nach dem thermischen Abbau der Perfluorpolymere im Reaktionsgefäß oder in einem separaten Reaktor erfolgt ist.

15. Verfahren zur Herstellung von radikalisch gekoppelten Perfluorpolymer-Polymer-Materialien, bei dem Perfluorpolymere mit persistenten aktiven oder reaktivierbaren Perfluoralkyl-(peroxy-)Radikalen und/oder Radikalen aus thermisch zerfallenen Gruppen, die nicht aus einem Bestrahlungsprozess und/oder einer Plasmabehandlung stammen, in Dispersion unter Zugabe von olefinisch ungesättigten Monomer(en), in Form von (Meth-)Acrylsäure und/oder (Meth-)Acrylsäureester und/oder Styren und/oder Divinylbenzen und/oder Styrensulfonsäure und/oder deren Salz(e) und/oder CF₂=CF-C₆H₄-SO₃H und/oder deren Salz(e) und/oder CF₂=CF-O-(CF₂-CF(CF₃)-O)ₙ-(CF₂)ₘ-SO₂-F und/oder CF₂=CF-O-(CF₂-CF(CF₃)-O)ₙ-(CF₂)ₘ-SO₃H (mit m,n ≥ 1 und vorzugsweise n = 1 und m = 3) und/oder deren Salz(e) und/oder Vinylacetat und/oder (Meth-)Acrylnitril und/oder Glycidyl-(meth-)acrylat und/oder Hydroxyethyl-(meth-)acrylat und/oder (Meth-)Acrylamid-Derivate und/oder Maleinsäureanhydrid als Copolymereinheit mit mindestens einem weiteren Comonomer, und/oder Makromer(en) und/oder Oligomer(en) und/oder Polymer(en) reaktiv umgesetzt werden.

16. Verfahren nach Anspruch 15, bei dem als Perfluorpolymer PTFE und/oder FEP eingesetzt werden.

17. Verfahren nach Anspruch 16, bei dem als Perfluorpolymer PTFE eingesetzt wird.

18. Verfahren nach Anspruch 17, bei dem als Perfluorpolymer ein PTFE-Pulver eingesetzt wird.

19. Verfahren nach Anspruch 18, bei dem das PTFE-Pulver als ein Mikropulver eingesetzt wird.

20. Verfahren nach Anspruch 15, bei dem eine Dispersion mit 1 bis 99 Masse-% an Feststoff eingesetzt wird.

21. Verfahren nach Anspruch 15, bei dem zur Dispersion Additive und/oder Dispergierhilfsmittel und/oder reaktive Stoffe eingesetzt werden.

22. Verfahren nach Anspruch 15, bei dem die, in das Verfahren eingesetzten, persistenten reaktiven und/oder reaktivierbaren Perfluoralkyl-(peroxy-)Radikale und/oder die Radikale aus den thermisch zerfallenen Gruppen im Perfluorpolymer durch einen Polymerisationsprozess hergestellt werden und in einer Folgereaktion mit olefinisch ungesättigten Monomer(en) und/oder Makromer(en) und/oder Oligomer(en) und/oder Polymer(en) reaktiv umgesetzt werden.

23. Verfahren nach Anspruch 15, bei dem die, in das Verfahren eingesetzten, persistenten reaktiven und/oder reaktivierbaren Perfluoralkyl-(peroxy-)Radikale und/oder die Radikale aus den thermisch zerfallenen Gruppen im Perfluorpolymer durch den thermischen Abbau solcher Perfluorpolymere hergestellt werden und in einer Folgereaktion mit olefinisch ungesättigten Monomer(en) und/oder Makromer(en) und/oder Oligomer(en) und/oder Polymer(en) reaktiv umgesetzt werden.

24. Verfahren nach Anspruch 15, bei dem eine Pfropfreaktion direkt im Anschluss an oder zeitlich versetzt nach der Polymerisation des Perfluorpolymers direkt im Reaktionsgefäß oder in einem separaten Reaktor durchgeführt wird.

25. Verfahren nach Anspruch 15, bei dem eine Pfropfreaktion direkt im Anschluss an oder zeitlich versetzt nach dem thermischen Abbau solcher Perfluorpolymere direkt im Reaktionsgefäß oder in einem separaten Reaktor durchgeführt wird.

26. Verfahren nach Anspruch 15, bei dem als olefinisch ungesättigte Monomere und/oder Makromere und/oder Oligomere und/oder Polymere solche Substanzen, die mindestens eine olefinisch ungesättigte Gruppe besitzen, eingesetzt werden.

27. Verfahren nach Anspruch 15, bei dem als derartig vorteilhafte olefinisch ungesättigte Makromere Polyether-(meth-)acrylate der Homo- oder Copolymeren aus Ethylenglycol- und/oder Propylenglycol- und/oder Butandioleinheiten eingesetzt werden.

28. Verfahren nach Anspruch 15, bei dem als olefinisch ungesättigte Polymere solche Polymere, die olefinisch ungesättigte Gruppen in der Hauptkette und/oder in der Seitenkette besitzen, eingesetzt werden.

29. Verfahren nach Anspruch 15, bei dem als olefinisch ungesättigte Oligomere und/oder Polymere werden SBS, ABS, SBR, NBR, NR sowie weitere Butadien-und/oder Isopren- und/oder Chloropren-Homo-, -Co- oder -Ter-Polymere eingesetzt werden.

30. Verfahren nach Anspruch 15, bei dem an ein Perfluorpolymer-Polymer-Material weitere Monomer(en) und/oder Makromer(en) und/oder Oligomer(en) und/oder Polymer(en) mit oder ohne funktionelle Gruppen durch eine reaktive Umsetzung gekoppelt werden.

## Claims

1. Free-radically coupled perfluoropolymer polymer materials, composed of perfluoropolymer to whose perfluoropolymer chains olefinically unsaturated monomers which are free-radically coupled (meth)acrylic acid and/or (meth)acrylic esters and/or styrene and/or divinylbenzene and/or styrenesulphonic acid and/or salt(s) thereof and/or CF₂=CF-C₆H₄-SO₃H and/or salt(s) thereof and/or CF₂=CF-O-(CF₂-CF(CF₃)-O)ₙ-(CF₂)ₘ-SO₂-F and/or CF₂=CF-O-(CF₂-CF(CF₃)-O)ₙ-(CF2)ₘ-SO₃H (with m ≥ 1, n ≥ 0 and preferably n = 1 and m = 3) and/or salt(s) thereof and/or vinyl acetate and/or (meth)acrylonitrile and/or glycidyl (meth)acrylate and/or hydroxyethyl (meth)acrylate and/or (meth)acrylamide derivatives and/or maleic anhydride as copolymer unit with at least one further comonomer, and/or macromers and/or oligomers and/or polymers in dispersion are chemically free-radically coupled via a reactive conversion, the radicals in the perfluoropolymer that are necessary for a free-radical coupling being persistent active or reactivatable perfluoroalkyl (peroxy) radicals and/or radicals from thermally decomposed groups which do not originate from an irradiation operation and/or from a plasma modification, and where at least two monomer units and/or macromer units and/or an oligomer and/or a polymer are coupled to one radical.

2. Free-radically coupled perfluoropolymer polymer materials according to Claim 1, in which the persistent reactive and/or reactivatable perfluoroalkyl (peroxy) radicals and/or the radicals from the thermally decomposed groups in the perfluoropolymer originate from a polymerization operation.

3. Free-radically coupled perfluoropolymer polymer materials according to Claim 1, in which the persistent reactive and/or reactivatable perfluoroalkyl (peroxy) radicals and/or the radicals from the thermally decomposed groups in the perfluoropolymer originate from a polymerization operation without metered addition of oxygen and without aftertreatment of the products for stabilization for higher processing temperatures.

4. Free-radically coupled perfluoropolymer polymer materials according to Claim 1, in which the persistent reactive and/or reactivatable perfluoroalkyl (peroxy) radicals and/or the radicals from the thermally decomposed groups in the perfluoropolymer originate from a polymerization operation with metered addition of oxygen and without aftertreatment of the products for stabilization for higher processing temperatures.

5. Free-radically coupled perfluoropolymer polymer materials according to Claim 1, in which the persistent reactive and/or reactivatable perfluoroalkyl (peroxy) radicals and/or the radicals from the thermally decomposed groups in the perfluoropolymer originate from the thermal degradation of such perfluoropolymers.

6. Free-radically coupled perfluoropolymer polymer materials according to Claim 1, in which the persistent reactive and/or reactivatable perfluoroalkyl (peroxy) radicals and/or the radicals from the thermally decomposed groups in the perfluoropolymer originate from the thermal degradation of such perfluoropolymers, there being no aftertreatment of the products with oxygen and no aftertreatment of the products for stabilization for higher processing temperatures.

7. Free-radically coupled perfluoropolymer polymer materials according to Claim 1, in which the persistent reactive and/or reactivatable perfluoroalkyl (peroxy) radicals and/or the radicals from the thermally decomposed groups in the perfluoropolymer originate from the thermal degradation of such perfluoropolymers, there being an aftertreatment of the products with oxygen and no aftertreatment of the products for stabilization for higher processing temperatures.

8. Free-radically coupled perfluoropolymer polymer materials according to Claim 1, in which PTFE and/or FEP are used as perfluoropolymer for the free-radical coupling.

9. Free-radically coupled perfluoropolymer polymer materials according to Claim 8, in which PTFE is used as perfluoropolymer for the free-radical coupling.

10. Free-radically coupled perfluoropolymer polymer materials according to Claim 1, in which substances which possess at least one olefinically unsaturated group are free-radically coupled as olefinically unsaturated monomers and/or macromers and/or oligomers and/or polymers.

11. Free-radically coupled perfluoropolymer polymer materials according to Claim 1, in which olefinically unsaturated macromers are free-radically coupled polyether (meth)acrylates of the homopolymers or copolymers comprising ethylene glycol units and/or propylene glycol units and/or butanediol units.

12. Free-radically coupled perfluoropolymer polymer materials according to Claim 1, in which olefinically unsaturated oligomers and/or polymers are free-radically coupled SBS, ABS, SBR, NBR, NR and also further homopolymers, copolymers or terpolymers of butadiene and/or isoprene and/or chloroprene.

13. Free-radically coupled perfluoropolymer polymer materials according to Claim 1, in which perfluorinated monomers having functional groups are free-radically coupled to the perfluoropolymer chain of the oligo-/polytetrafluoroethylene originating from a polymerization operation or thermal degradation.

14. Free-radically coupled perfluoropolymer polymer materials according to Claim 1, in which a grafting reaction to give the (block) copolymer product has taken place directly following or at a later point in time after the polymerization of the perfluoropolymer or after the thermal degradation of the perfluoropolymer in the reaction vessel or in a separate reactor.

15. Process for preparing free-radically coupled perfluoropolymer polymer materials, in which perfluoropolymers with persistent active or reactivatable perfluoroalkyl (peroxy) radicals and/or radicals from thermally decomposed groups which do not originate from an irradiation operation and/or from a plasma treatment are reactively converted in dispersion with addition of olefinically unsaturated monomer(s) in the form of (meth)acrylic acid and/or (meth)acrylic esters and/or styrene and/or divinylbenzene and/or styrenesulphonic acid and/or salt(s) thereof and/or CF₂=CF-C₆H₄-SO₃H and/or salt(s) thereof and/or CF₂=CF-O-(CF₂-CF(CF₃)-O)ₙ-(CF₂)ₘ-SO₂-F and/or CF₂=CF-O-(CF₂-CF(CF₃)-O)ₙ-(CF₂)ₘ-SO₃H (with m, n ≥ 1, and preferably n = 1 and m = 3) and/or salt(s) thereof and/or vinyl acetate and/or (meth)acrylonitrile and/or glycidyl (meth)acrylate and/or hydroxyethyl (meth)acrylate and/or (meth)acrylamide derivatives and/or maleic anhydride as copolymer unit with at least one further comonomer, and/or with macromer(s) and/or oligomer(s) and/or polymer(s).

16. Process according to Claim 15, in which PTFE and/or FEP are used as perfluoropolymer.

17. Process according to Claim 16, in which PTFE is used as perfluoropolymer.

18. Process according to Claim 17, in which a PTFE powder is used as perfluoropolymer.

19. Process according to Claim 18, in which the PTFE powder is used as a micropowder.

20. Process according to Claim 15, in which a dispersion with 1% to 99% by mass of solid is used.

21. Process according to Claim 15, in which additives and/or dispersing assistants and/or reactive substances are used for the dispersion.

22. Process according to Claim 15, in which the persistent reactive and/or reactivatable perfluoroalkyl (peroxy) radicals and/or the radicals from the thermally decomposed groups in the perfluoropolymer that are used in the process are prepared by polymerization operation and are reactively converted in a subsequent reaction with olefinically unsaturated monomer(s) and/or macromer(s) and/or oligomer(s) and/or polymer(s).

23. Process according to Claim 15, in which the persistent reactive and/or reactivatable perfluoroalkyl (peroxy) radicals and/or the radicals from the thermally decomposed groups in the perfluoropolymer that are used in the process are prepared by the thermal degradation of such perfluoropolymers and are reactively converted in a subsequent reaction with olefinically unsaturated monomer(s) and/or macromer(s) and/or oligomer(s) and/or polymer(s).

24. Process according to Claim 15, in which a grafting reaction is carried out directly following or at a time after the polymerization of the perfluoropolymer directly in the reaction vessel or in a separate reactor.

25. Process according to Claim 15, in which a grafting reaction is carried out directly following or at a time after the thermal degradation of such perfluoropolymers directly in the reaction vessel or in a separate reactor.

26. Process according to Claim 15, in which substances which possess at least one olefinically unsaturated group are used as olefinically unsaturated monomers and/or macromers and/or oligomers and/or polymers.

27. Process according to Claim 15, in which polyether (meth)acrylates of the homopolymers or copolymers comprising ethylene glycol units and/or propylene glycol units and/or butanediol units are used as such advantageous olefinically unsaturated macromers.

28. Process according to Claim 15, in which polymers which possess olefinically unsaturated groups in the main chain and/or in the side chain are used as olefinically unsaturated polymers.

29. Process according to Claim 15, in which SBS, ABS, SBR, NBR, NR and also further homopolymers, copolymers or terpolymers of butadiene and/or isoprene and/or chloroprene are used as olefinically unsaturated oligomers and/or polymers.

30. Process according to Claim 15, in which further monomer(s) and/or macromer(s) and/or oligomer(s) and/or polymer(s) with or without functional groups are coupled by a reactive conversion to a perfluoropolymer polymer material.

## Revendications

1. Matériaux perfluoropolymère-polymère à couplage radicalaire, constitués de perfluropolymère, sur les chaînes perfluoropolymères duquel des monomères, qui sont l'acide (méth)acrylique et/ou un ester de l'acide (méth)acrylique et/ou le styrène et/ou le divinylbenzène et/ou l'acide styrènesulfonique et/ou leur(s) sel(s) et/ou CF₂=CF-C₆H₄-SO₃H et/ou leur(s) sel(s) et/ou CF₂=CF-O-(CF₂-CF(CF₃)-O)ₙ-(CF₂)ₘ-SO₂-F et/ou CF₂=CF-O-(CF₂-CF(CF₃)-O)ₙ-(CF₂)ₘ-SO₃H (avec m ≥ 1, n ≥ 0 et de préférence n = 1 et m = 3) et/ou leur(s) sel(s) et/ou l'acétate de vinyle et/ou le (méth)acrylonitrile et/ou le (méth)acrylate de glycidyle et/ou le (méth)acrylate d'hydroxyéthyle et/ou des dérivés de (méth)acrylamide et/ou l'anhydride de l'acide maléique en tant qu'unité de copolymère avec au moins un comonomère supplémentaire, et/ou macromères et/ou oligomères et/ou polymères oléfiniquement insaturés sont couplés chimiquement par voie radicalaire en dispersion par une transformation réactive, les radicaux nécessaires pour le couplage radicalaire dans le perfluoropolymère étant des radicaux perfluoroalkyl(peroxy) actifs persistants ou réactivables et/ou des radicaux de groupes décomposés thermiquement, qui ne sont pas issus d'un procédé d'exposition à un rayonnement et/ou d'une modification plasma, et au moins deux unités monomères et/ou macromères et/ou un oligomère et/ou un polymère étant couplés sur un radical.

2. Matériaux perfluoropolymère-polymère à couplage radicalaire selon la revendication 1, dans lesquels les radicaux perfluoroalkyl(peroxy) réactifs persistants et/ou réactivables et/ou les radicaux des groupes décomposés thermiquement dans le perfluoropolymère sont issus d'un procédé de polymérisation.

3. Matériaux perfluoropolymère-polymère à couplage radicalaire selon la revendication 1, dans lesquels les radicaux perfluoroalkyl(peroxy) réactifs persistants et/ou réactivables et/ou les radicaux des groupes décomposés thermiquement dans le perfluoropolymère sont issus d'un procédé de polymérisation sans introduction d'oxygène et sans post-traitement des produits pour la stabilisation pour des températures d'usinage supérieures.

4. Matériaux perfluoropolymère-polymère à couplage radicalaire selon la revendication 1, dans lesquels les radicaux perfluoroalkyl(peroxy) réactifs persistants et/ou réactivables et/ou les radicaux des groupes décomposés thermiquement dans le perfluoropolymère sont issus d'un procédé de polymérisation avec introduction d'oxygène et sans post-traitement des produits pour la stabilisation pour des températures d'usinage supérieures.

5. Matériaux perfluoropolymère-polymère à couplage radicalaire selon la revendication 1, dans lesquels les radicaux perfluoroalkyl(peroxy) réactifs persistants et/ou réactivables et/ou les radicaux des groupes décomposés thermiquement dans le perfluoropolymère sont issus de la décomposition thermique de tels perfluoropolymères.

6. Matériaux perfluoropolymère-polymère à couplage radicalaire selon la revendication 1, dans lesquels les radicaux perfluoroalkyl(peroxy) réactifs persistants et/ou réactivables et/ou les radicaux des groupes décomposés thermiquement dans le perfluoropolymère sont issus de la décomposition thermique de tels perfluoropolymères, aucun post-traitement des produits avec de l'oxygène et aucun post-traitement des produits pour la stabilisation pour des températures d'usinage supérieures n'ayant lieu.

7. Matériaux perfluoropolymère-polymère à couplage radicalaire selon la revendication 1, dans lesquels les radicaux perfluoroalkyl(peroxy) réactifs persistants et/ou réactivables et/ou les radicaux des groupes décomposés thermiquement dans le perfluoropolymère sont issus de la décomposition thermique de tels perfluoropolymères, un post-traitement des produits avec de l'oxygène ayant lieu et aucun post-traitement des produits pour la stabilisation pour des températures d'usinage supérieures n'ayant lieu.

8. Matériaux perfluoropolymère-polymère à couplage radicalaire selon la revendication 1, dans lesquels le PTFE et/ou le FEP sont utilisés en tant que perfluoropolymère pour le couplage radicalaire.

9. Matériaux perfluoropolymère-polymère à couplage radicalaire selon la revendication 8, dans lesquels le PTFE est utilisé en tant que perfluoropolymère pour le couplage radicalaire.

10. Matériaux perfluoropolymère-polymère à couplage radicalaire selon la revendication 1, dans lesquels des substances qui comprennent au moins un groupe oléfiniquement insaturé sont couplées par voie radicalaire en tant que monomères et/ou macromères et/ou oligomères et/ou polymères oléfiniquement insaturés.

11. Matériaux perfluoropolymère-polymère à couplage radicalaire selon la revendication 1, dans lesquels des macromères oléfiniquement insaturés sont des (méth)acrylates de polyéther d'homo- ou copolymères à base d'unités éthylène glycol et/ou propylène glycol et/ou butanediol couplés par voie radicalaire.

12. Matériaux perfluoropolymère-polymère à couplage radicalaire selon la revendication 1, dans lesquels des oligomères et/ou polymères oléfiniquement insaturés sont le SBS, l'ABS, le SBR, le NBR, le NR, ainsi que d'autres homo-, co- ou terpolymères de butadiène et/ou d'isoprène et/ou de chloroprène, couplés par voie radicalaire.

13. Matériaux perfluoropolymère-polymère à couplage radicalaire selon la revendication 1, dans lesquels des monomères perfluorés à groupes fonctionnels sont couplés par voie radicalaire sur les chaînes perfluoropolymères de l'oligo-/du polytétrafluoroéthylène issu d'un procédé de polymérisation ou d'une décomposition thermique.

14. Matériaux perfluoropolymère-polymère à couplage radicalaire selon la revendication 1, dans lesquels une réaction de greffage pour former le produit copolymère (séquencé) a lieu directement après ou de manière décalée dans le temps après la polymérisation du perfluoropolymère ou après la décomposition thermique des perfluoropolymères dans le récipient de réaction ou dans un réacteur distinct.

15. Procédé de fabrication de matériaux perfluoropolymère-polymère à couplage radicalaire, dans lequel des perfluoropolymères comportant des radicaux perfluoroalkyl(peroxy) actifs persistants ou réactivables et/ou des radicaux de groupes décomposés thermiquement, qui ne sont pas issus d'un procédé d'exposition à un rayonnement et/ou d'un traitement plasma, sont transformés réactivement en dispersion avec ajout d'un ou de plusieurs monomères, sous la forme d'acide (méth)acrylique et/ou d'un ester de l'acide (méth)acrylique et/ou de styrène et/ou de divinylbenzène et/ou d'acide styrènesulfonique et/ou leur(s) sel(s) et/ou CF₂=CF-C₆H₄-SO₃H et/ou leur(s) sel(s) et/ou CF₂=CF-O-(CF₂-CF(CF₃)-O)ₙ-(CF₂)ₘ-SO₂-F et/ou CF₂=CF-O-(CF₂-CF(CF₃)-O)ₙ-(CF₂)ₘ-SO₃H (avec m, n ≥ 1 et de préférence n = 1 et m = 3) et/ou leur(s) sel(s) et/ou d'acétate de vinyle et/ou de (méth)acrylonitrile et/ou de (méth)acrylate de glycidyle et/ou de (méth)acrylate d'hydroxyéthyle et/ou de dérivés de (méth)acrylamide et/ou d'anhydride de l'acide maléique en tant qu'unité de copolymère avec au moins un comonomère supplémentaire, et/ou macromères et/ou oligomères et/ou polymères oléfiniquement insaturés.

16. Procédé selon la revendication 15, dans lequel le PTFE et/ou le FEP sont utilisés en tant que perfluoropolymère.

17. Procédé selon la revendication 16, dans lequel le PTFE est utilisé en tant que perfluoropolymère.

18. Procédé selon la revendication 17, dans lequel une poudre de PTFE est utilisée en tant que perfluoropolymère.

19. Procédé selon la revendication 18, dans lequel la poudre de PTFE est utilisée sous la forme d'une micropoudre.

20. Procédé selon la revendication 15, dans lequel une dispersion contenant 1 à 99 % en masse de solides est utilisée.

21. Procédé selon la revendication 15, dans lequel des additifs et/ou des adjuvants de dispersion et/ou des substances réactives sont utilisés pour la dispersion.

22. Procédé selon la revendication 15, dans lequel les radicaux perfluoroalkyl(peroxy) réactifs persistants et/ou réactivables et/ou les radicaux des groupes décomposés thermiquement utilisés dans le procédé dans le perfluoropolymère sont fabriqués par un procédé de polymérisation et sont transformés réactivement lors d'une réaction secondaire avec un ou plusieurs monomères et/ou macromères et/ou oligomères et/ou polymères oléfiniquement insaturés.

23. Procédé selon la revendication 15, dans lequel les radicaux perfluoroalkyl(peroxy) réactifs persistants et/ou réactivables et/ou les radicaux des groupes décomposés thermiquement utilisés dans le procédé dans le perfluoropolymère sont fabriqués par la décomposition thermique de tels perfluoropolymères et sont transformés réactivement lors d'une réaction secondaire avec un ou plusieurs monomères et/ou macromères et/ou oligomères et/ou polymères oléfiniquement insaturés.

24. Procédé selon la revendication 15, dans lequel une réaction de greffage est réalisée directement après ou de manière décalée dans le temps après la polymérisation du perfluoropolymère directement dans le récipient de réaction ou dans un réacteur distinct.

25. Procédé selon la revendication 15, dans lequel une réaction de greffage est réalisée directement après ou de manière décalée dans le temps après la décomposition thermique de tels perfluoropolymères directement dans le récipient de réaction ou dans un réacteur distinct.

26. Procédé selon la revendication 15, dans lequel des substances qui comprennent au moins un groupe oléfiniquement insaturé sont utilisées en tant que monomères et/ou macromères et/ou oligomères et/ou polymères oléfiniquement insaturés.

27. Procédé selon la revendication 15, dans lequel des (méth)acrylates de polyéther d'homo- ou copolymères à base d'unités éthylène glycol et/ou propylène glycol et/ou butanediol sont utilisés en tant que tels macromères oléfiniquement insaturés avantageux.

28. Procédé selon la revendication 15, dans lequel des polymères qui comprennent des groupes oléfiniquement insaturés dans la chaîne principale et/ou dans la chaîne latérale sont utilisés en tant que polymères oléfiniquement insaturés.

29. Procédé selon la revendication 15, dans lequel le SBS, l'ABS, le SBR, le NBR, le NR, ainsi que d'autres homo-, co- ou terpolymères de butadiène et/ou d'isoprène et/ou de chloroprène sont utilisés en tant qu'oligomères et/ou polymères oléfiniquement insaturés.

30. Procédé selon la revendication 15, selon lequel un ou plusieurs autres monomères et/ou macromères et/ou oligomères et/ou polymères avec ou sans groupes fonctionnels sont couplés par une transformation réactive sur un matériau perfluoropolymère-polymère.
